# EUROPEAN PATENT APPLICATION

(11) **EP 2 797 045 A1**
(43) Date of publication of application: **29.10.2014**
(21) Application number: 14163954.2
(22) Date of filing: 09.04.2014
(51) Int. Cl.: G06Q 30/02, G06Q 10/10, G06Q 50/00

(54) **Extracting a social graph from contact information across a confined user base**

(30) Priority: 24.04.2013 US 201361815640 P; 24.03.2014 US 201414223816
(71) Applicant: Synchronoss Technologies, Inc., Bridgewater, NJ 08807 (US)
(72) Inventor: Chaudry, Omar, Wood Dale, IL 60191 (US); Fuller, Andrew, Dublin, 16 (IE)
(74) Representative: Goddar, Heinz J.

(57) **Abstract**

Embodiments of the present invention relate to extraction of a social graph from contact information across a confined user base. Users are typically subscribed to a service that backs up data from end-user devices to a cloud. The data includes contacts from mobile address books. The service is able to determine relationships of contacts in the cloud to build a social graph or map of these contacts. The social graph can be used to drive individual and group analytics to, for example, increase membership and provide value-added features to its service members.

## Description

### Related Applications

This application claims benefit of priority under 35 U.S.C. section 119(e) of the copending United States Provisional Patent Application Serial No. 61/815,640 filed April 24, 2013, entitled "Mobile Applications," which is hereby incorporated by reference in its entirety.

### Field of Invention

The present invention relates to social graphs. More particularly, the present invention relates to extracting a social graph from contact information across a confined user base.

### Background of the Invention

Mobile backup services exist today. However, these prior art mobile backup services simply allow users to backup data, such as address books of mobile devices. These prior art mobile backup services know little about their users. As such, these prior art mobile backup services are not able to drive membership growth and provide value-added features and perhaps monetize therefrom.

### Brief Summary of the Invention

Embodiments of the present invention relate to extraction of a social graph from contact information across a confined user base. Users are typically subscribed to a service that backs up data from end-user devices to a cloud. The data includes contacts from mobile address books. The service is able to determine relationships of contacts in the cloud to build a social graph or map of these contacts. The social graph can be used to drive individual and group analytics to, for example, increase membership and provide value-added features to its service members.

In one aspect, a non-transitory computer-readable medium is provided. The non-transitory computer-readable medium stores instructions that, when executed by a computing device, cause the computing device to perform a method. The method includes receiving a set of deduplicated contact entries from each of a plurality of end-user devices. In some embodiments, the set of deduplicated contact entries is an aggregate of all distinct contact entries of contacts in an address book stored on a respective end-user device.

The method also includes storing all received deduplicated contact entries from the plurality of end-user devices in one or more repositories communicatively coupled with the computing device, and deduplicating the stored contact entries, thereby generating distinct contact entries. Contacts associated with the distinct contact entries include members of a service. The contacts associated with the distinct contact entries can also include non-members of the service.

In some embodiments, the deduplication step includes using at least one key to generate the distinct contact entries. The at least one key can be a phone number, an email address, or any suitable key. In some embodiments, the at least one key includes two keys. Put differently, more than one key is used to generate the distinct contact entries.

In some embodiments, the deduplication step includes using geolocation information of each of the stored contact entries to generate the distinct contact entries.

The method also includes extracting a social graph from the distinct contact entries.

In some embodiments, the method further includes monetizing using the social graph.

In some embodiments, the method further includes enriching the social graph by using a strength-of-relationship metric. The strength-of-relationship metric can be based on frequency of communication between contacts of the social graph. The communication includes at least one of SMS messaging, MMS messaging, emailing, and telephoning. The strength-of-relationship metric can also be based on geolocation information of contacts.

In some embodiments, the method further includes providing at least one service member with missing contact information of any of that service member's contacts.

In some embodiments, the method further includes allowing a first service member to automatically share all of the first service member's contact information with a second service member when the second service member has at least a predetermined number of correct fields in a contact entry for the first service member.

In another aspect, a system is provided. The system is for extracting information across a confined user base. The system includes a plurality of end-user devices. Each of the of the end-user devices includes a memory for storing a native address book containing contact entries. In some embodiments, at least one of the plurality of end-user devices is configured to perform a deduplication process of the contact entries stored thereon prior to sending the contact entries to the server.

The system also includes a server in communication with the plurality of end-user devices via a network. The server hosts a service configured to deduplicate contact entries received from the plurality of end-user devices, thereby generating distinct contact entries, and to extract a social graph from the distinct contact entries.

In some embodiments, the service is also configured to determine contacts in the social graph that are not subscribed to the service, and to send the contacts invitations to join the service.

In some embodiments, the system also includes an external provider. The external provider sends offers to contacts within an N^{th} degree connection with members of the service based on the social graph.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 illustrates an exemplary system according to an embodiment of the present invention.
FIG. 2 illustrates a block diagram of an exemplary computing device according to an embodiment of the present invention.
FIG. 3 illustrates an exemplary method of generating a social graph according to an embodiment of the present invention.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Embodiments of the present invention relate to extraction of a social graph from contact information across a confined user base. Users are typically subscribed to a service that backs up data from end-user devices to a cloud. The data includes contacts from mobile address books. The service is able to determine relationships of contacts in the cloud to build a social graph or map of these contacts. The social graph can be used to drive individual and group analytics to, for example, increase membership and provide value-added features to its service members.

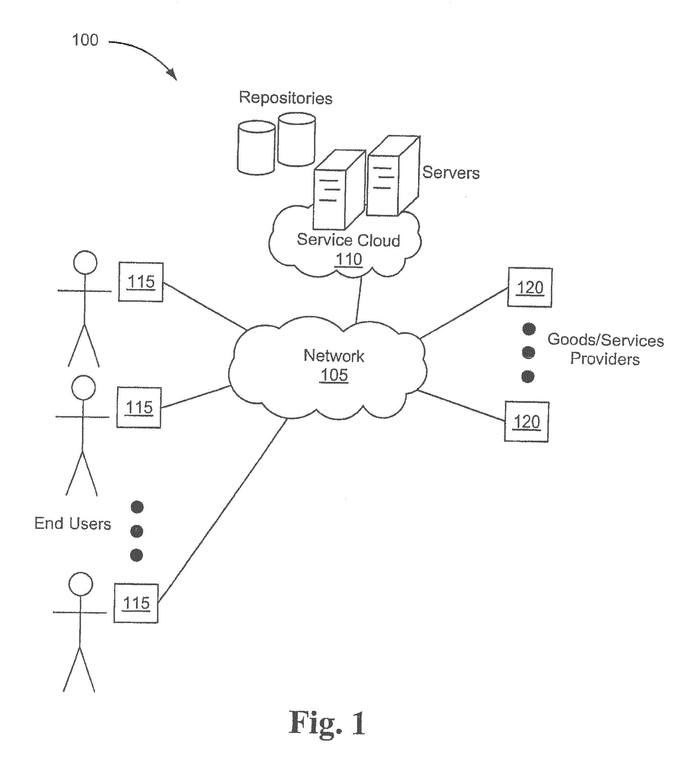

FIG. 1 illustrates an exemplary system 100 according to an embodiment of the present invention. The system 100 typically includes a network 105, such as the Internet, and a service cloud 110 that is communicatively coupled with the network 105. A server(s) in the cloud 110 is configured to provide service to service members. Briefly, the service backs up mobile data received from end-user devices 115 that are used by the service members in one or more repositories. The one or more repositories can be located in the cloud 110, as illustrated in FIG. 1, although the repositories can be located elsewhere in the system 100. The mobile data that is backed up can include photos, calendars, music, documents, financial files, and text messages. Other mobile data, such mobile address books, can also be backed up. Typically, a mobile address book includes contact entries of contacts. As will be discussed in greater detail below, the service is also able to deduplicate contact entries received from the end-user devices 115 to generate a distinct contact entry for a contact, and to extract a social graph from distinct contact entries. A social graph is a graph or a map that depicts relationships or connections of contacts.

A contact can be a person or an entity, such as a business. In some embodiments, based on the social graph, the service is able to determine contacts in the social graph that have not yet subscribed to the service and is able to send those contacts invitations to join the service.

Each end-user device 115 typically belongs to a service member or subscriber of the service. Each service member typically has an account in the cloud 110. The account allows the subscriber to set his/her preferences, such as frequency of backup, notifications and information sharing settings. The subscriber is typically able to access the account via a web page or a client program installed on the end-user device 125.

A user might have multiple contact entries for the same contact stored on an end-user device 115, with each contact entry including a different contact or communication mode. In some embodiments, the user of the end-user device 115 is able to perform a deduplication process of the contact entries stored thereon. The deduplication process typically allows multiple contact entries in the native phone book for the same contact to be merged into one aggregate contact entry containing all relevant details associated with that contact. The deduplication process can be a manual or an assisted approach. The assisted approach typically implements a set of algorithms which deduplicates a user's set of contact entries.

For example, Cameron has three contact entries for Kassy: a first contact entry including Kassy's cell number, a second contact entry including Kassy's home number, and a third contact entry including Kassy's email address. During the deduplication process, the three contact entries for Kassy are merged into one contact entry such that the one contact entry for Kassy has three of the fields - the cell number field, the home number field and the email address field-populated or filled. It should be noted that the cell number field, the home number field and the email address field are only exemplary fields. Other fields, such as home address and IM, in a contact entry are possible.

The system 100 also includes goods/services providers 120 that are communicatively coupled with the network 105. The partnered goods/services providers 120 can be a provider of discounted gift certificates or any provider of either goods, services or both. In some embodiments, these external providers 120 are able to send offers to members of the service and contacts within an N^{th} degree connection with the members, based on the social graph.

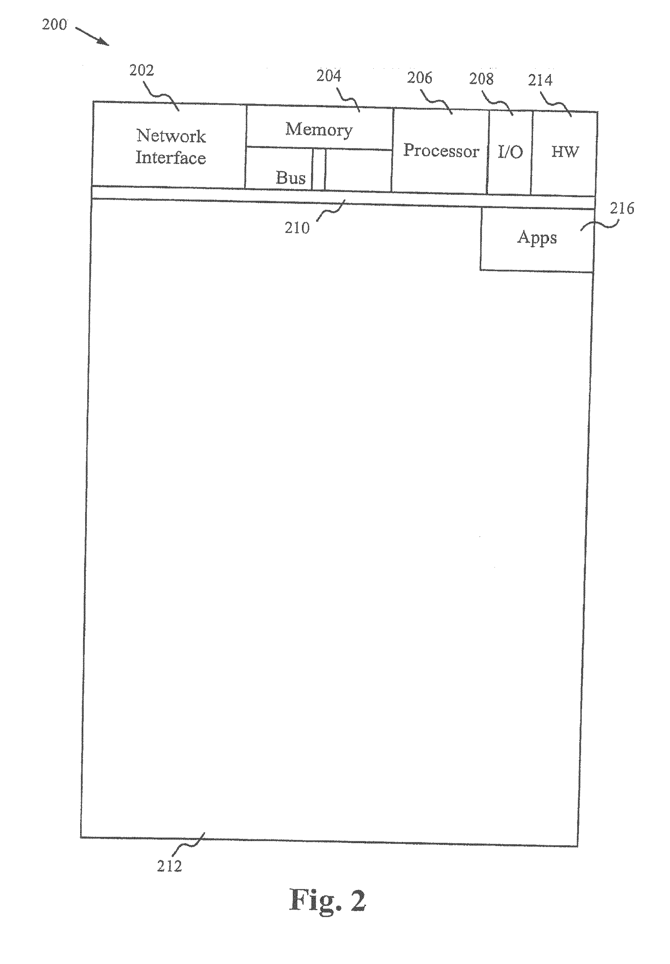

FIG. 2 illustrates a block diagram of an exemplary computing device 200 according to an embodiment of the present invention. The computing device 200 is able to be used to acquire, cache, store, compute, search, transfer, communicate and/or display information. The server(s) in the cloud 110 and/or the end-user devices 125, 130 of the FIG. 1 can be similarly configured as the computing device 200.

In general, a hardware structure suitable for implementing the computing device 200 includes a network interface 202, a memory 204, processor(s) 206, I/O device(s) 208, a bus 210 and a storage device 212. The choice of processor 206 is not critical as long as a suitable processor with sufficient speed is chosen. In some embodiments, the computing device 200 includes a plurality of processors 206. The memory 204 is able to be any conventional computer memory known in the art. The storage device 212 is able to include a hard drive, CDROM, CDRW, DVD, DVDRW, flash memory card, RAM, ROM, EPROM, EEPROM or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, display, printer, modem, touchscreen, button interface and other devices. Application(s) 214, such as the native address book on the end-user device, the client program or one or more server side applications implementing the service discussed above, are likely to be stored in the storage device 212 and memory 204 and are processed by the processor 206. More or less components shown in Figure 2 are able to be included in the computing device 200.

The computing device 200 can be a server or an end-user device. Exemplary end-user devices include, but are not limited to, a tablet, a mobile phone, a smart phone, a desktop computer, a laptop computer, a netbook, or any suitable computing device such as special purpose devices, including set top boxes and automobile consoles.

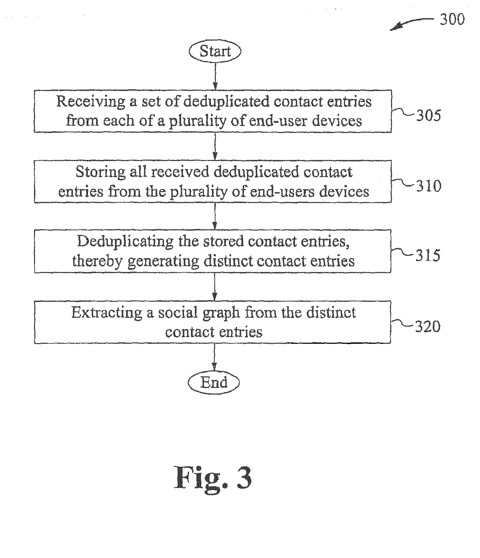

FIG. 3 illustrates an exemplary method 300 of generating a social graph according to an embodiment of the present invention. The server in the cloud 110 of FIG. 1 typically performs the method 300. The method 300 begins at a step 305, where a set of deduplicated contact entries is received from each of a plurality of end-user devices. Typically, users of the plurality of end-user devices are members of the service hosted by the server. A set of deduplicated contacts is an aggregate of all distinct contacts stored on a respective end-user device. In the above example, the three contact entries for Kassy in Cameron's address book are merged into one distinct contact entry such that only that distinct contact entry exists for Kassy. The one contact entry for Kassy will include the cell number, the home number and the email address. Similarly, all other contact entries in Cameron's address book that are determined to be for the same contact are deduplicated prior to the set of deduplicated contact entries is transferred from Cameron's end-user device and received at the server.

At a step 310, all received deduplicated contact entries from the plurality of end-user devices are stored in one or more repositories that are communicatively coupled with the server. In some embodiments, the steps 305 and 310 are a part of a backup process, in which other mobile data is also received from the plurality of end-user devices to be backed up (e.g., stored) in the one or more repositories.

In some embodiments, the server can perform a separate deduplication process on each of the received sets of contact entries to ensure that each set of contacts received from an end-device contains a single contact entry for a contact. This is particularly useful in situations when the deduplication process is not performed thoroughly or not even performed on one or more of the plurality of end-user devices prior to the sending of the set of contact entries from the end-user device(s).

At a step 315, all stored contact entries in the one or more repositories are deduplicated to generate distinct contact entries in the cloud 110 of FIG. 1. This deduplication process applied across the entire user base within the cloud 110 is similar to a deduplication process performed on an end-user device. The cloud's deduplication process uses a key to generate the distinct contact entries. The key can be a phone number (e.g., a cell number, a home number, a fax number, an office number) or an email address. Other keys, such as name, are possible. However, typically, name alone is not used in the deduplication process since there could be more contact with the same name. In some embodiments, two or more keys are used to generate the distinct contact entries. Using a plurality of keys typically improves the likelihood of successful deduplication matches.

In some embodiments, geolocation information of each of contact entry is used to generate the distinct contact entries. For example, a contact entry for Sarah Smith whose geolocation information is Sunnyvale, CA is likely to be different from a contact entry for Sarah Smith whose geolocation information is Orlando, FL.

Typically, contacts (e.g., people or entities) associated with the distinct contact entries include members of the service. The contacts associated with the distinct contact entries can also include non-members of the service.

At a step 320, a social graph is extracted from the distinct contact entries. In particular, the cloud's deduplication process identifies contacts who are known to multiple contacts and builds the social graph of these relationships. For example, if Cameron has a contact entry for Brian with a cell number X and Sam also has a contact entry for Brian with a cell number X, then Cameron and Sam know each other indirectly through Brian. Since contacts involved do not necessarily need to be members of the service, a contact does not need to have an account in the cloud or, put differently, does not need to be a member of the service, to be included in the social graph. After the step 320, the method 300 ends.

In some embodiments, the social graph can be enriched by using a strength-of-relationship metric. The strength-of-relationship metric can be based on frequency of communication between the contacts. Communication can be SMS messaging, MMS messaging, emailing, and/or telephoning. The frequency of communication typically establishes importance of each contact to another. For example, Cameron may not have contacted Pauline before yet have a contact entry for Pauline in Cameron's address book. The service is able to determine that Pauline is not a strong contact of Cameron based on the frequency of communication between Cameron and Pauline. In comparison, Sam who contacts Pauline on a daily basis via one or more of the communication means has a stronger connection with Pauline.

The strength-of-relationship metric can also be based on the geolocation information. For example, if Cameron and Pauline are located in different countries, and Sam and Pauline are located in the same time zone, then there is a higher chance that the connection between Sam and Pauline is stronger than the connection between Cameron and Pauline. The strength-of-relationship metric provides a sense of how strong a connection is between contacts in the social graph.

In some embodiments, the service can implement a "missing contact" functionality, with or without the permission of a respective contact. The "missing contact" functionality provides a service member with missing contact information of any of that service member's contacts. For example, Cameron and Sam are both members and each has a contact entry for Brian. Cameron's contact entry for Brian includes a postal address, but Sam's contact entry for Brian doesn't. The service is able to update Sam's contact entry for Brian to include the postal address. In some embodiments, the service first requests permission from Brian prior to the update. In some embodiments, if Brian is not a member of the service, Brian is invited to join the service. The "missing contact" functionality is able to automatically inform Sam of the update of the contact entry for Brian. Alternatively or in addition to, Sam is able to request the server for an update of the contact entry for Brian.

In some embodiments, the service allows members to automatically share all of their contact information with others such that a first service member is able to automatically share all of the first service member's contact information with a second service member when the second members has a least a predetermined number of correct fields in a contact entry for the first service member. For example, Brian, through profile settings or configurations in his account in the cloud, has allowed all of his information to be shared with those who have at least three correct fields in a contact entry for Brian. Cameron has three correct fields in a contact entry for Brian: work email, cell number, and postal address. The service is able to provide Cameron a notification that there is an update for the contact entry for Brian. If Cameron accepts to update, Cameron will automatically receive all of Brian's information (e.g., personal email, IM, home number, birth date, work address). In comparison, Bella, who has two correct fields in a contact entry for Brian, will not receive a notification regarding the update for the contact entry for Brian.

Unlike prior art mobile backup services, the service of the present invention is able to build a social graph from contact information. The social graph depicts relationships of contacts who are members and non-members of the service. The social graph can be used to drive individual and group analytics across the platform, such as likes/dislikes, recommendations, advertising, friend suggestions, etc.

In some embodiments, the service of the present invention can be monetized by using the social graph. For example, a cellular carrier implementing this invention is able to use the social graph to find contacts that Cameron knows either directly or indirectly. Given that it is likely that these contacts like things similar to Cameron, these contacts become second level targets of a targeted advertising campaign.

The service of the present invention can also be used to drive growth by determining which contacts would be suitable candidates for an invitation to join the service. For example, if the service determines that many of its members have contacts for non-member Brian, then Brian is sent an invitation to join the service.

Driving service growth can also be used outside of the ecosystem by the external providers 120 of FIG. 1. For example, a Groupon®-like company can use geolocation information of the contacts of the social graph to send food offers to selected contacts with suggestion of a list of invitees that includes the selected contacts and other contacts who are linked frequently. As discussed above, the external provider is able to send offers to contacts within an N^{th} degree connection with members of the service based on the social graph.

One of ordinary skill in the art will realize other uses and advantages also exist. While the invention has been described with reference to numerous specific details, one of ordinary skill in the art will recognize that the invention can be embodied in other specific forms without departing from the spirit of the invention. Thus, one of ordinary skill in the art will understand that the invention is not to be limited by the foregoing illustrative details, but rather is to be defined by the appended claims.

## Claims

1. A non-transitory computer-readable medium storing instructions that, when executed by a computing device, cause the computing device to perform a method, the method comprising:
receiving a set of deduplicated contact entries from each of a plurality of end-user devices;
storing all received deduplicated contact entries from the plurality of end-user devices in one or more repositories communicatively coupled with the computing device;
deduplicating the stored contact entries, thereby generating distinct contact entries; and
extracting a social graph from the distinct contact entries.

2. The non-transitory computer-readable medium of Claim 1, wherein the set of deduplicated contact entries is an aggregate of all distinct contact entries of contacts in an address book stored on respective end-user devices.

3. The non-transitory computer-readable medium of Claim 1, wherein contacts associated with the distinct contact entries includes members and non-members of a service.

4. The non-transitory computer-readable medium of Claim 1, wherein the deduplication step comprises using at least one key to generate the distinct contact entries, wherein the at least one key is a phone number or an email address.

5. The non-transitory computer-readable medium of Claim 1, wherein the deduplication step comprises using at least two keys to generate the distinct contact entries.

6. The non-transitory computer-readable medium of Claim 1, wherein the deduplication step comprises using geolocation information of each of the stored contact entries to generate the distinct contact entries.

7. The non-transitory computer-readable medium of Claim 1, wherein the method further comprises monetizing using the social graph and enriching the social graph by using a strength-of-relationship metric.

8. The non-transitory computer-readable medium of Claim 11, wherein the strength-of-relationship metric is based on frequency of communication between contacts of the social graph, wherein the communication includes at least one of SMS messaging, MMS messaging, emailing, and telephoning.

9. The non-transitory computer-readable medium of Claim 11, wherein the strength-of-relationship metric is based on geolocation information of contacts.

10. The non-transitory computer-readable medium of Claim 1, wherein the method further comprises providing at least one service member with missing contact information of any of that service member's contacts.

11. The non-transitory computer-readable medium of Claim 1, wherein the method further comprises allowing a first service member to automatically share all of the first service member's contact information with a second service member when the second service member has at least a predetermined number of correct fields in a contact entry for the first service member.

12. A system for extracting information across a confined user base, the system comprising:
a plurality of end-user devices, each of the of the end-user devices including a memory for storing a native address book containing contact entries; and
a server in communication with the plurality of end-user devices via a network, wherein the server hosts a service configured to:
deduplicate contact entries received from the plurality of end-user devices, thereby generating distinct contact entries; and
extract a social graph from the distinct contact entries.

13. The system of Claim 12, wherein at least one of the plurality of end-user devices is configured to perform a deduplication process of the contact entries stored thereon prior to sending the contact entries to the server.

14. The system of Claim 12, wherein the service is also configured to determine contacts in the social graph that are not subscribed to the service, and to send the contacts invitations to join the service.

15. The system of Claim 12, further comprising an external provider, wherein the external provider sends offers to contacts within an N^{th} degree connection with members of the service based on the social graph.
